# EUROPEAN PATENT APPLICATION

(11) **EP 4 012 826 A1**
(43) Date of publication of application: **15.06.2022**
(21) Application number: 21209793.5
(22) Date of filing: 23.11.2021
(51) Int. Cl.: H01M 50/103, H01M 50/15, H01M 50/119, H01M 50/159, H01M 50/645, B21J 15/00, F16B 19/00, H01M 10/42

(54) **BATTERY AND METHOD FOR MANUFACTURING SAME**

(30) Priority: 14.12.2020 JP 2020206988
(71) Applicant: Prime Planet Energy & Solutions, Inc., Chuo-ku Tokyo 103-0022 (JP)
(72) Inventor: MURATA, Ichirou, Tokyo, 103-0022 (JP); WAKIMOTO, Ryoichi, Tokyo, 103-0022 (JP); MARUBAYASHI, Hironori, Tokyo, 103-0022 (JP)
(74) Representative: Kuhnen & Wacker Patent- und Rechtsanwaltsbüro PartG mbB

(57) **Abstract**

A battery disclosed herein includes: electrode bodies; an outer package which has an opening and which houses the electrode bodies; a sealing plate which seals the opening of the outer package and which has a through-hole and a recessed portion provided around the through-hole on a surface of a side opposing the electrode bodies; and a sealing member which seals the through-hole of the sealing plate. The sealing member has an inserted portion having been inserted to the through-hole and an enlarged diameter portion which extends from the inserted portion to inside of the outer package and which is formed with a larger diameter than the inserted portion. At least a part of the enlarged diameter portion is arranged inside the recessed portion of the sealing plate.

## Description

### BACKGROUND OF THE DISCLOSURE

### 1. Technical Field

The present disclosure relates to a battery and a method for manufacturing the same.

### 2. Description of Background

Conventionally, a battery is known which includes: an electrode body which has a positive electrode and a negative electrode; an outer package which has an opening and which houses the electrode body; a sealing plate which is provided with an electrolyte injection hole and which seals the opening of the outer package; and a sealing member which seals the electrolyte injection hole of the sealing plate. With such a battery, after injecting an electrolyte solution from the electrolyte injection hole, the electrolyte injection hole is sealed by the sealing member.

For example, Japanese Patent Application Publication No. 2013-114799 discloses using a blind rivet as a sealing member. The blind rivet includes: an inserted portion having been inserted into an electrolyte injection hole in a state after swaging; a collar-shaped flange which extends from the inserted portion to outside of an outer package and which is formed with a larger diameter than the electrolyte injection hole; and an enlarged diameter portion which extends from the inserted portion to inside of the outer package and which is formed with a larger diameter than the inserted portion.

### SUMMARY

In a battery according to Japanese Patent Application Publication No. 2013-114799, the enlarged diameter portion of the blind rivet protrudes toward an electrode body from a lower surface of the sealing plate. Therefore, a height of the electrode body must be kept low in order to prevent the electrode body from interfering with the enlarged diameter portion. As a result, there is a problem in that a ratio of the electrode body in the outer package decreases and a volume energy density of the battery declines.

The present disclosure has been made in consideration of the circumstances described above and an object thereof is to provide a battery with a high volume energy density and a method of manufacturing the same.

According to the present disclosure, a battery is provided which includes: an electrode body which has a positive electrode and a negative electrode; an outer package which has an opening and which houses the electrode body; a sealing plate which seals the opening of the outer package and which has a through-hole and a recessed portion provided around the through-hole on a surface on a side opposing the electrode body; and a sealing member which seals the through-hole of the sealing plate. The sealing member has an inserted portion having been inserted to the through-hole and an enlarged diameter portion which extends from the inserted portion to inside of the outer package and which is formed with a larger diameter than the inserted portion. At least a part of the enlarged diameter portion is arranged inside the recessed portion of the sealing plate.

In the present disclosure, a recessed portion is provided on an inner surface of the sealing plate and at least a part of the sealing member is arranged inside the recessed portion. According to such a configuration, a length (a protrusion height) of the sealing member that protrudes toward the electrode body from a lower surface of the sealing plate can be reduced. Therefore, for example, compared to the battery according to Japanese Patent Application Publication No. 2013-114799, an upper end of the electrode body can be relatively arranged on a side of the sealing plate and a height of the electrode body can be increased. As a result, a volume fraction occupied by the electrode body inside the outer package can be increased and a battery with high volume energy density can be provided.

In addition, prior to shipping the battery, there is a step of confirming that a through-hole provided in the sealing plate is securely sealed by the sealing member (sealability). According to studies carried out by the present inventors, sealability can be confirmed by, for example, confirming whether or not an enlarged diameter portion of the sealing member has a predetermined shape by an X-ray examination. In this case, providing a recessed portion on an inner surface of the sealing plate enables a distance traveled by X-rays to pass through the sealing plate (a sealing plate passing distance) to be reduced and makes transmission of X-rays less likely to be inhibited. As a result, for example, even when the sealing plate is made of a material that hardly transmits X-rays (for example, metal), a clear X-ray photograph of the enlarged diameter portion can be obtained. Accordingly, whether or not the enlarged diameter portion has a predetermined shape can be accurately determined. Therefore, an X-ray examination can be performed in a stable manner and a battery with a highly reliable sealing portion can be provided.

In a preferable aspect of the battery disclosed herein, the sealing plate has an approximately rectangular shape, and the enlarged diameter portion has a maximum width portion with a maximum width in a longitudinal direction of the sealing plate. In this case, when a cross section X1 represents a cross section which is perpendicular to the sealing plate, which extends in a short direction of the sealing plate, and which passes an end in the longitudinal direction of the maximum width portion and a cross section X2 represents a cross section which is perpendicular to the sealing plate, which extends in a short direction of the sealing plate, and which passes another end in the longitudinal direction of the maximum width portion, the cross section X1 and the cross section X2 have a straight line A which passes the maximum width portion and which does not intersect with the electrode body. In such a configuration, emitting X-rays along the straight line A in an X-ray examination makes it easier to obtain a clear X-ray photograph of the maximum width portion. Accordingly, whether or not the enlarged diameter portion has a predetermined shape can be accurately determined.

In a preferable aspect of the battery disclosed herein, the sealing plate is made of aluminum or an aluminum alloy. In each of the cross section X1 and the cross section X2, a distance of the straight line A passing the sealing plate is 10 mm or less. According to such a configuration, the sealing plate passing distance of X-rays can be further reduced and an even clearer X-ray photograph can be obtained. Therefore, an X-ray examination can be more accurately performed.

In a preferable aspect of the battery disclosed herein, in each of the cross section X1 and the cross section X2, the straight line A passes the recessed portion. According to such a configuration, the sealing plate passing distance of X-rays can be further reduced and an even clearer X-ray photograph can be obtained. Therefore, an X-ray examination can be more accurately performed.

In a preferable aspect of the battery disclosed herein, the recessed portion has a bottom surface and a side surface that rises to a side of the electrode body from an outer edge of the bottom surface, and in each of the cross section X1 and the cross section X2, the straight line A passes the bottom surface of the recessed portion. According to such a configuration, the sealing plate passing distance of X-rays can be further reduced and an even clearer X-ray photograph can be obtained. Therefore, an X-ray examination can be more accurately performed.

In a preferable aspect of the battery disclosed herein, the sealing plate has a base portion with an approximately uniform thickness, and in each of the cross section X1 and the cross section X2, the straight line A does not pass a surface on a side opposing the electrode body of the base portion. According to such a configuration, the sealing plate passing distance of X-rays can be further reduced and an even clearer X-ray photograph can be obtained. Therefore, an X-ray examination can be more accurately performed.

In a preferable aspect of the battery disclosed herein, the sealing plate has a base portion with an approximately rectangular shape and an approximately uniform thickness, the enlarged diameter portion has a maximum width portion with a maximum width in a longitudinal direction of the sealing plate, and the recessed portion has a bottom surface and a side surface that rises to a side of the electrode body from an outer edge of the bottom surface. In this case, when a cross section X1 represents a cross section which is perpendicular to the sealing plate, which extends in a short direction of the sealing plate, and which passes an end in the longitudinal direction of the maximum width portion and a cross section X2 represents a cross section which is perpendicular to the sealing plate, which extends in a short direction of the sealing plate, and which passes another end in the longitudinal direction of the maximum width portion, in the cross section X1, when a point A represents a point where a straight line 1 which is parallel to a central axis of the sealing member and which passes the maximum width portion and an extension line of a surface on a side opposing the electrode body of the base portion intersect with each other, a straight line B represents a straight line which is a tangent at a surface on a side of the sealing plate of the electrode body and which passes the point A, a point B represents a point where the straight line 1 and the bottom surface of the recessed portion intersect with each other, and a straight line C represents a straight line which is parallel to the straight line B and which passes the point B, the straight line B and the straight line C pass the bottom surface or the side surface of the recessed portion, and in the cross section X2, when a point A' represents a point where a straight line 1' which is parallel to a central axis of the sealing member and which passes the maximum width portion and an extension line of a surface on a side opposing the electrode body of the base portion intersect with each other, a straight line B' represents a straight line which is a tangent at a surface on a side of the sealing plate of the electrode body and which passes the point A', a point B' represents a point where the straight line 1' and the bottom surface of the recessed portion intersect with each other, and a straight line C' represents a straight line which is parallel to the straight line B' and which passes the point B', the straight line B' and the straight line C' pass the bottom surface or the side surface of the recessed portion. According to such a configuration, an entirety of the maximum width portion arranged in the recessed portion can be more readily confirmed. Therefore, an X-ray examination can be more accurately performed and reliability of the sealing portion can be improved.

In a preferable aspect of the battery disclosed herein, the straight line B and the straight line B' pass the bottom surface of the recessed portion. According to such a configuration, a length by which X-rays pass through the sealing plate can be further reduced and an even clearer X-ray photograph can be obtained. Therefore, an X-ray examination can be more accurately performed.

In a preferable aspect of the battery disclosed herein, a shortest distance between the straight line C and the side surface of the recessed portion and a shortest distance between the straight line C' and the side surface of the recessed portion are each within 15 mm. According to such a configuration, a width of the recessed portion can be minimized and a strength and deformation resistance of the sealing plate can be increased.

In a preferable aspect of the battery disclosed herein, the sealing plate has a base portion with an approximately rectangular shape and an approximately uniform thickness, the enlarged diameter portion has a maximum width portion with a maximum width in a longitudinal direction of the sealing plate, and the recessed portion has a bottom surface and a side surface that rises to a side of the electrode body from an outer edge of the bottom surface. In this case, when a cross section X1 represents a cross section which is perpendicular to the sealing plate, which extends in a short direction of the sealing plate, and which passes an end in the longitudinal direction of the maximum width portion and a cross section X2 represents a cross section which is perpendicular to the sealing plate, which extends in a short direction of the sealing plate, and which passes another end in the longitudinal direction of the maximum width portion, in the cross section X1, when a point X represents an end on a side close to the electrode body of the maximum width portion, a straight line D represents a straight line which is a tangent at a surface on a side of the sealing plate of the electrode body and which passes the point X, a point Y represents an end on a side close to the sealing plate of the maximum width portion, and a straight line E represents a straight line which is parallel to the straight line D and which passes the point Y, the straight line D and the straight line E pass the bottom surface or the side surface of the recessed portion, and in the cross section X2, when a point X' represents an end on a side close to the electrode body of the maximum width portion, a straight line D' represents a straight line which is a tangent at a surface on a side of the sealing plate of the electrode body and which passes the point X', a point Y' represents an end on a side close to the sealing plate of the maximum width portion, and a straight line E' represents a straight line which is parallel to the straight line D' and which passes the point Y', the straight line D' and the straight line E' pass the bottom surface or the side surface of the recessed portion. According to such a configuration, an entirety of the maximum width portion arranged in the recessed portion can be more readily confirmed. Therefore, an X-ray examination can be more accurately performed and reliability of the sealing portion can be improved.

In a preferable aspect of the battery disclosed herein, the sealing plate has a base portion with an approximately rectangular shape and an approximately uniform thickness.

In a cross section C1 which is perpendicular to the sealing plate, which extends in a short direction of the sealing plate, and which passes a center of the sealing member, when a point C represents a point where a central axis of the sealing member and an extension line of a surface on a side opposing the electrode body of the base portion intersect with each other, a surface on a side farther from the electrode body of the sealing plate is provided with a groove portion so as to intersect with a tangent drawn from the point C to a surface on a side of the sealing plate of the electrode body. According to such a configuration, the sealing plate passing distance of X-rays can be further reduced and an even clearer X-ray photograph can be obtained. Therefore, an X-ray examination can be more accurately performed.

In addition, according to the present disclosure, a method of manufacturing a battery is provided, the battery including: an electrode body which has a positive electrode and a negative electrode; an outer package which has an opening and which houses the electrode body; a sealing plate which seals the opening of the outer package and which has a through-hole and a recessed portion provided around the through-hole on a surface on a side opposing the electrode body; and a sealing member which seals the through-hole of the sealing plate, the sealing member having an inserted portion having been inserted to the through-hole and an enlarged diameter portion which extends from the inserted portion to inside of the outer package and which is formed with a larger diameter than the inserted portion, and at least a part of the enlarged diameter portion being arranged inside the recessed portion of the sealing plate. The method of manufacturing a battery includes the steps of forming the enlarged diameter portion by inserting the sealing member into the through-hole from the outside of the outer package and causing a tip of the sealing member to deform; and after forming the enlarged diameter portion, confirming whether or not the enlarged diameter portion has a predetermined shape by emitting X-rays.

According to studies carried out by the present inventors, in the confirming step, examining the shape of the enlarged diameter portion using X-rays enables a defect of the enlarged diameter portion to be accurately detected. Accordingly, the fact that the through-hole is securely sealed by the sealing member can be confirmed. Therefore, a battery with a highly reliable sealing portion can be provided.

In a preferable aspect of the manufacturing method disclosed herein, the sealing plate has an approximately rectangular shape, and the enlarged diameter portion has a maximum width portion with a maximum width in a longitudinal direction of the sealing plate. In this case, when a cross section X1 represents a cross section which is perpendicular to the sealing plate, which extends in a short direction of the sealing plate, and which passes an end in the longitudinal direction of the maximum width portion and a cross section X2 represents a cross section which is perpendicular to the sealing plate, which extends in a short direction of the sealing plate, and which passes another end in the longitudinal direction of the maximum width portion, the cross section X1 and the cross section X2 have a straight line A which passes the maximum width portion and which does not intersect with the electrode body, and in the confirming step, the X-rays are emitted along the straight line A. Emitting X-rays along the straight line A makes it easier to obtain a clear X-ray photograph of the maximum width portion. Accordingly, whether or not the enlarged diameter portion has a predetermined shape can be accurately determined.

### BRIEF DESCRIPTION OF THE DRAWINGS

FIG. 1 is a perspective view schematically showing a secondary battery according to an embodiment;
FIG. 2 is a schematic longitudinal sectional view taken along line II-II in FIG. 1;
FIG. 3 is a schematic longitudinal sectional view taken along line III-III in FIG. 1;
FIG. 4 is a schematic transverse sectional view taken along line IV-IV in FIG. 1;
FIG. 5 is a schematic plan view of a vicinity of an electrolyte injection hole of a sealing plate as viewed from an inside of a battery;
FIG. 6 is a partial schematic longitudinal sectional view taken along line X1-X1 in FIG. 5;
FIG. 7 is a diagram corresponding to FIG. 6 for illustrating points A and B and straight lines B and C;
FIG. 8 is a diagram corresponding to FIG. 6 for illustrating points X and Y and straight lines D and E;
FIG. 9 is a partial enlarged view in which a vicinity of a maximum width portion in FIG. 8 has been enlarged;
FIG. 10 is a diagram corresponding to FIG. 6 for illustrating straight lines F and G and angles α1 and β1;
FIG. 11 is a diagram corresponding to FIG. 6 for illustrating straight lines H and I and angles α2 and β2;
FIG. 12 is a diagram corresponding to FIG. 6 for illustrating straight lines J and K and angles α3 and β3;
FIG. 13 is a perspective view schematically showing an electrode body group attached to a sealing plate;
FIG. 14 is a perspective view schematically showing an electrode body to which a positive electrode second current collecting unit and a negative electrode second current collecting unit have been attached;
FIG. 15 is a schematic view showing a configuration of an electrode body;
FIG. 16 is a perspective view schematically showing a sealing plate to which a positive electrode terminal, a negative electrode terminal, a positive electrode first current collecting unit, a negative electrode first current collecting unit, a positive electrode internal insulating member, and a negative electrode internal insulating member have been attached;
FIG. 17 is a perspective view in which the sealing plate shown in FIG. 16 has been reversed;
FIG. 18 is diagram corresponding to FIG. 6 of a battery according to a first modification;
FIG. 19 is diagram corresponding to FIG. 6 of a battery according to a second modification;
FIG. 20 is schematic plan view showing a part of a sealing plate of a battery according to a third modification; and
FIG. 21 is a partial schematic longitudinal sectional view taken along line C1-C1 in FIG. 20.

### DETAILED DESCRIPTION

Hereinafter, some preferable embodiments of the technique disclosed herein will be described with reference to the drawings. It should be noted that matters required to carry out the present disclosure (for example, a general configuration and a general manufacturing process of secondary batteries which do not characterize the present disclosure) other than those specifically described in the present specification can be comprehended as design matters for a person with ordinary skill in the art on the basis of prior art in the relevant field. The present disclosure can be carried out on the basis of the contents disclosed in the present specification and common general technical knowledge in the relevant field. Furthermore, a notation of "A to B" representing a range in the present specification is to mean "A or more and B or less" but also includes the meanings of "favorably more than A" and "favorably less than B".

In the present specification, a "secondary battery" is a term that refers to repetitively chargeable and dischargeable power storage devices in general and is a concept that encompasses so-called storage batteries (chemical batteries) such as a lithium-ion secondary battery and a nickel hydride battery as well as capacitors (physical batteries) such as an electrical double layer capacitor.

### Secondary Battery 100

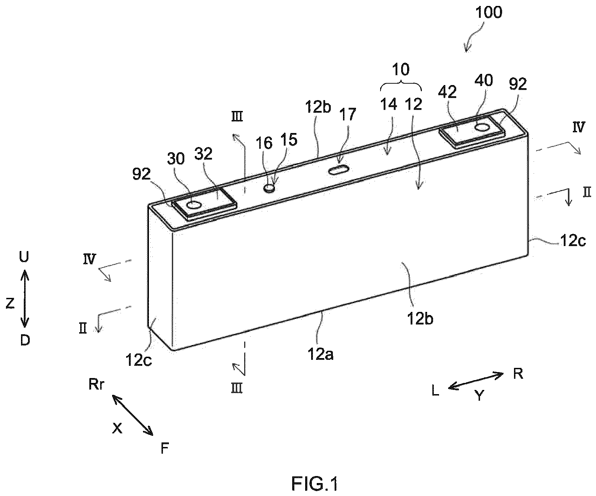

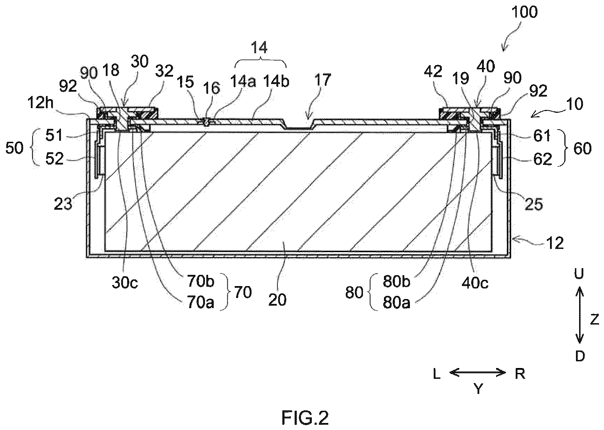

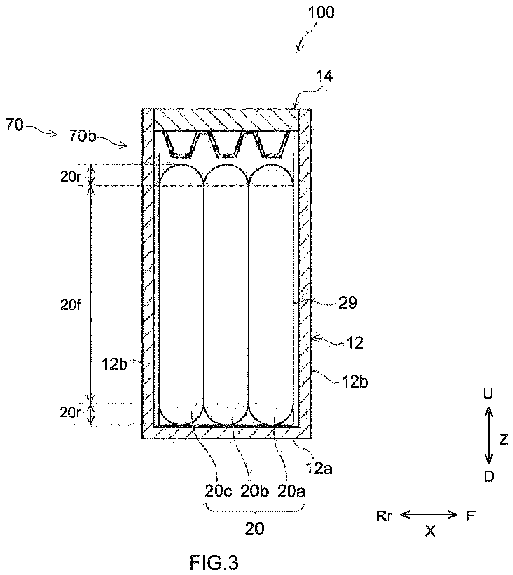

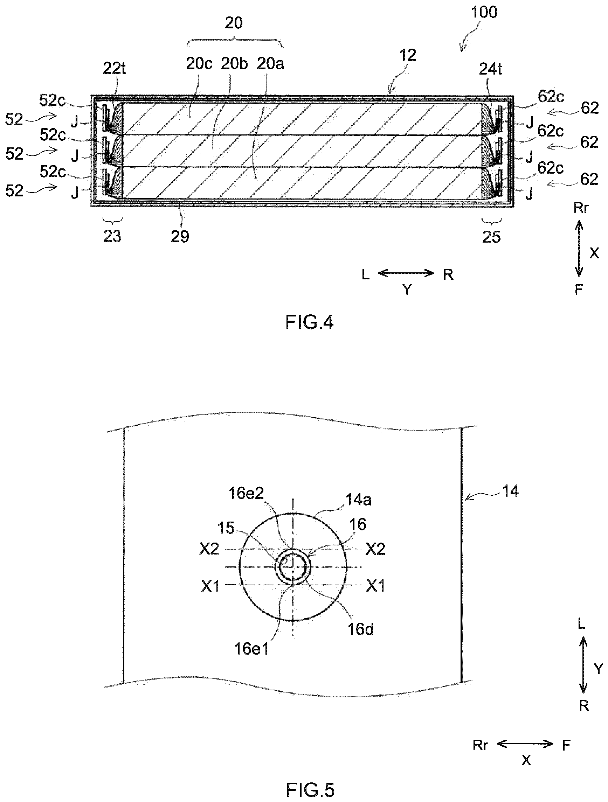

FIG. 1 is a perspective view of a secondary battery 100. FIG. 2 is a schematic longitudinal sectional view taken along line II-II in FIG. 1. FIG. 3 is a schematic longitudinal sectional view taken along line III-III in FIG. 1. FIG. 4 is a schematic transverse sectional view taken along line IV-IV in FIG. 1. In the following description, it is assumed that reference signs L, R, F, Rr, U, and D in the drawings represent left, right, front, rear, up, and down and reference signs X, Y, and Z in the drawings respectively represent a short-side direction of the secondary battery 100, a long-side direction that is perpendicular to the short-side direction, and an up-down direction. However, these directions are only provided in order to facilitate understanding and are not intended to limit modes of installation of the secondary battery 100 in any way whatsoever.

As shown in FIG. 2, the secondary battery 100 includes a battery case 10, an electrode body group 20, a positive electrode terminal 30, a negative electrode terminal 40, a positive electrode current collecting unit 50, a negative electrode current collecting unit 60, a positive electrode internal insulating member 70, and a negative electrode internal insulating member 80. Although details will be provided later, the positive electrode current collecting unit 50 includes a positive electrode first current collecting unit 51 and a positive electrode second current collecting unit 52, and the negative electrode current collecting unit 60 includes a negative electrode first current collecting unit 61 and a negative electrode second current collecting unit 62. Although not illustrated, the secondary battery 100 in this case further includes an electrolyte solution. In this case, the secondary battery 100 is a lithium-ion secondary battery.

The battery case 10 is a casing which houses the electrode body group 20. In this case, the battery case 10 has an external shape that is a flat and bottomed rectangular parallelopiped shape (square shape). As shown in FIG. 2, the battery case 10 includes an outer package 12 having an opening 12h and a sealing plate (lid) 14 which closes the opening 12h. The battery case 10 is integrated by joining (for example, weld joining) the sealing plate 14 to a peripheral edge of the opening 12h of the outer package 12. Joining of the sealing plate 14 can be performed by, for example, welding such as laser welding. The opening 12h of the battery case 10 is airtightly sealed.

As shown in FIG. 1, the outer package 12 includes a bottom wall 12a, a pair of long-side walls 12b which extend from the bottom wall 12a and which oppose each other, and a pair of short-side walls 12c which extend from the bottom wall 12a and which oppose each other. The bottom wall 12a has an approximately rectangular shape. An area of the short-side wall 12c is smaller than an area of the long-side wall 12b. A material of the outer package 12 may be similar to those conventionally used and is not particularly limited. The outer package 12 is preferably made of a metal and, for example, more preferably made of aluminum, an aluminum alloy, iron, an iron alloy, or the like, and even more preferably made of aluminum or an aluminum alloy.

The sealing plate 14 is attached to the outer package 12 so as to close the opening 12h of the outer package 12. The sealing plate 14 opposes the bottom wall 12a of the outer package 12. The sealing plate 14 has an approximately rectangular shape in a plan view.
In this case, a short direction of the sealing plate 14 coincides with a short-side direction X of the secondary battery 100 and a longitudinal direction of the sealing plate 14 coincides with a long-side direction Y of the secondary battery 100. A material of the sealing plate 14 may be similar to those conventionally used and is not particularly limited. The sealing plate 14 is preferably made of a metal and, for example, more preferably made of aluminum, an aluminum alloy, iron, an iron alloy, or the like, and even more preferably made of aluminum or an aluminum alloy.

A width of the sealing plate 14 in the short direction (the short-side direction X in FIG. 1) is preferably 25 to 55 mm, more preferably 30 to 50 mm, and even more preferably 35 to 45 mm. Accordingly, an X-ray examination can be more accurately performed in a confirming step to be described later. In addition, a strength and deformation resistance of the sealing plate 14 can be increased.

As shown in FIG. 2, the sealing plate 14 is provided with a base portion 14b. The base portion 14b has a predetermined width. The base portion 14b is a region of which a thickness is approximately uniform or, in other words, a region in which irregularities are not formed in the up-down direction Z. The thickness (a length in the up-down direction Z) of the base portion 14b is preferably 2 to 4 mm and more preferably 2.5 to 3.2 mm. Accordingly, accuracy of an X-ray examination and a strength and deformation resistance of the sealing plate 14 can be increased in a balanced manner.

The sealing plate 14 is also provided with a gas release vent 17 and two terminal extracting holes 18 and 19. The gas release vent 17 is configured to break when pressure inside the battery case 10 reaches or exceeds a predetermined value and discharge gas inside the battery case 10 to the outside. The terminal extracting holes 18 and 19 are respectively formed at both ends in the longitudinal direction of the sealing plate 14. The terminal extracting holes 18 and 19 penetrate the sealing plate 14 in the up-down direction Z.

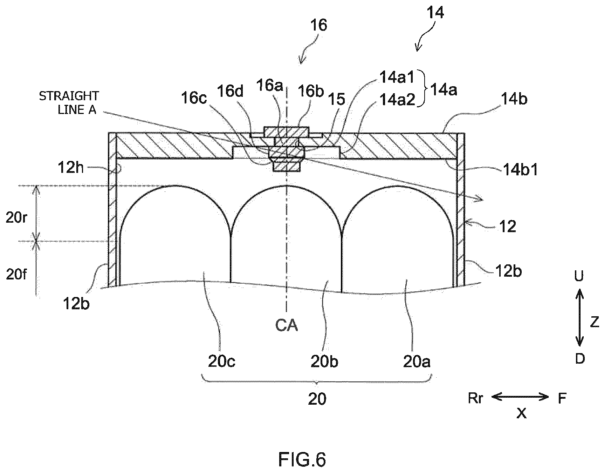

The sealing plate 14 is further provided with an electrolyte injection hole 15 and a recessed portion 14a. The electrolyte injection hole 15 is for injecting an electrolyte solution after the sealing plate 14 is assembled to the outer package 12. As shown in FIG. 2, the electrolyte injection hole 15 penetrates the sealing plate 14 in the up-down direction Z. FIG. 5 is a schematic plan view of a vicinity of the electrolyte injection hole 15 of the sealing plate 14 as viewed from the inside of the battery. As shown in FIG. 5, the electrolyte injection hole 15 is formed in an approximately circular shape in a plan view. The electrolyte injection hole 15 is sealed by a blind rivet 16. An inserted portion 16a (refer to FIG. 6) of the blind rivet 16 is inserted into the electrolyte injection hole 15. The electrolyte injection hole 15 is an example of the through-hole.

As shown in FIG. 5, the recessed portion 14a is provided so as to surround a periphery of the electrolyte injection hole 15. In this case, the recessed portion 14a is formed in an approximately circular shape that is larger than the electrolyte injection hole 15 in a plan view. In a plan view, a center of the recessed portion 14a coincides with a center of the electrolyte injection hole 15. When the width of the sealing plate 14 is assumed to be 100% in the short-side direction X, a ratio of the width of the recessed portion 14a is preferably 25 to 40% and more preferably 30 to 35%.

FIG. 6 is a partial schematic longitudinal sectional view taken along line X1-X1 in FIG. 5. As shown in FIG. 6, the recessed portion 14a is depressed upward from a surface on a side opposing the electrode body group 20 (a surface on a side of the inside of the battery, a lower surface in FIG. 6). The recessed portion 14a has a bottom surface 14a1 and a side surface 14a2. In this case, the bottom surface 14a1 is approximately parallel to an upper surface (a surface on a side of the outside of the battery) of the sealing plate 14. The side surface 14a2 rises toward a side of the electrode body group 20 from an outer edge of the bottom surface 14a1. In this case, the side surface 14a2 rises at an approximately right angle from the bottom surface 14a1. Alternatively, the angle formed between the bottom surface 14a1 and the side surface 14a2 may be an acute angle or an obtuse angle.

A thickness (a length in the up-down direction Z) of a thickness remaining portion of the sealing plate 14 of a portion where the recessed portion 14a has been formed is preferably 0.8 to 1.8 mm, more preferably 0.9 to 1.4 mm, and even more preferably 1 to 1.2 mm. Setting the thickness of the thickness remaining portion to the range described above enables accuracy of an X-ray examination and a strength and deformation resistance of the sealing plate 14 to be increased in a balanced manner. Accordingly, even when the pressure inside the battery case 10 fluctuates to a certain degree while the secondary battery 100 is being used, the sealing plate 14 is less likely to deform. Therefore, an occurrence of a leak due to breakage of a joint (for example, a weld joining portion) between the outer package 12 and the sealing plate 14 can be effectively suppressed. In addition, an occurrence of a variation in operating pressure of the gas release vent 17 can be suppressed.

The blind rivet 16 is a member which seals the electrolyte injection hole 15 of the sealing plate 14. The blind rivet 16 is typically made of a metal. The blind rivet 16 is a part of the sealing member. As shown in FIG. 6, the blind rivet 16 has an inserted portion 16a, a flange portion 16b, and an enlarged diameter portion 16c. The blind rivet 16 is fixed by swaging to the sealing plate 14 by the flange portion 16b and the enlarged diameter portion 16c.

The inserted portion 16a is a portion inserted into the electrolyte injection hole 15. An outer diameter of the inserted portion 16a is smaller than the electrolyte injection hole 15. The flange portion 16b extends upward from an upper end of the inserted portion 16a. An outer diameter of the flange portion 16b is larger than the electrolyte injection hole 15. The flange portion 16b protrudes to the outside of the battery case 10 from the electrolyte injection hole 15. The flange portion 16b is placed on an upper surface of the sealing plate 14. The flange portion 16b may be formed in an approximately circular shape or an approximately quadrangular shape in a plan view. In this case, the flange portion 16b is smaller than the recessed portion 14a of the sealing plate 14 in a plan view.

The enlarged diameter portion 16c extends downward (toward an opposite side to the inserted portion 16a) from a lower end of the inserted portion 16a. An outer diameter of the enlarged diameter portion 16c is larger than the electrolyte injection hole 15. The enlarged diameter portion 16c extends inside the outer package 12 from the inserted portion 16a. According to the technique disclosed herein, as shown in FIG. 6, at least a part of the enlarged diameter portion 16c is arranged inside the recessed portion 14a of the sealing plate 14. An entirety of the enlarged diameter portion 16c may or may not be arranged inside the recessed portion 14a. By arranging at least a part of the enlarged diameter portion 16c inside the recessed portion 14a of the sealing plate 14, a length (a protrusion height) of the blind rivet 16 that protrudes to a surface on a side of the electrode body group 20 can be reduced. Therefore, an upper end of the electrode body group 20 can be arranged close to the sealing plate 14 and a height of the electrode body group 20 can be increased. The enlarged diameter portion 16c has a maximum width portion 16d with a maximum width in the long-side direction Y.

In some embodiments, when a cross section X1 represents a cross section along a line XI-XI which extends along the up-down direction Z and the short-side direction X (which is perpendicular to the sealing plate 14 and which extends in a short direction of the sealing plate 14) and which passes an end 16e1 (refer to FIG. 5) in the long-side direction Y (the longitudinal direction of the sealing plate 14) of the maximum width portion 16d, as shown in FIG. 6, the cross section X1 has a straight line A which passes the maximum width portion 16d and which does not intersect with the electrode body group 20. In other words, the straight line A can be drawn on the cross section X1. In addition, although not illustrated, when a cross section X2 represents a cross section along a line X2-X2 which extends along the up-down direction Z and the short-side direction X (which is perpendicular to the sealing plate 14 and which extends in a short direction of the sealing plate 14) and which passes another end 16e2 (refer to FIG. 5) in the long-side direction Y (the longitudinal direction of the sealing plate 14) of the maximum width portion 16d, in a similar manner to the cross section X1, the cross section X2 has the straight line A which passes the maximum width portion 16d and which does not intersect with the electrode body group 20. Due to the cross section X1 and the cross section X2 having the straight line A, during an X-ray examination, a clear X-ray photograph of the maximum width portion 16d can be more readily obtained and whether or not the enlarged diameter portion 16c has a predetermined shape can be accurately determined.

Although not particularly limited since differences may arise due to examination conditions or the like of an X-ray examination, in each of the cross section X1 and the cross section X2, a distance of the straight line A passing the sealing plate 14 is preferably 12 mm or less, more preferably 10 mm or less, and even more preferably 7 mm or less. Accordingly, a distance traveled by X-rays to pass through the sealing plate (a sealing plate passing distance) can be further reduced and an even clearer X-ray photograph can be obtained. Therefore, an X-ray examination can be more accurately performed.

As shown in FIG. 6, the straight line A preferably passes the recessed portion 14a of the sealing plate 14 and more preferably passes the bottom surface 14a1 of the recessed portion 14a in the cross section X1. The straight line A preferably does not pass a lower surface (a surface on a side opposing the electrode body group 20) 14b1 of the base portion 14b in the cross section X1. In addition, although not illustrated, the straight line A preferably passes the recessed portion 14a of the sealing plate 14 and more preferably passes the bottom surface 14a1 of the recessed portion 14a in the cross section X2. The straight line A preferably does not pass the lower surface 14b1 of the base portion 14b in the cross section X2. Satisfying at least one of the above enables the sealing plate passing distance to be further reduced and an X-ray examination to be more accurately performed.

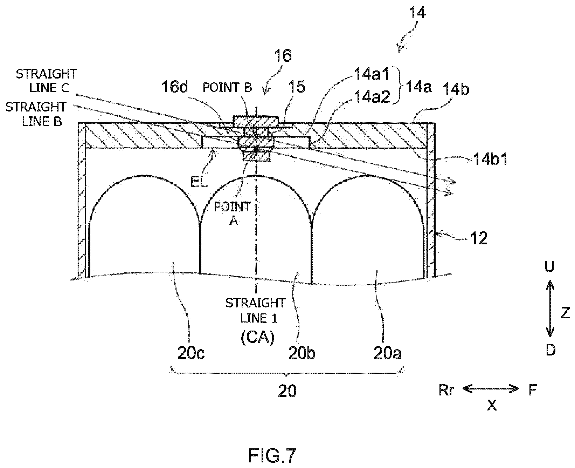

In some embodiments, as shown in FIG. 7, in the cross section X1, when (1) a point A represents a point where a straight line 1 which is parallel to a central axis CA of the blind rivet 16 (which is perpendicular to the sealing plate 14) and which passes the maximum width portion 16d and an extension line EL of the lower surface 14b1 of the base portion 14b intersect with each other, (2) a straight line B represents a straight line which is a tangent at a surface on a side of the sealing plate 14 of the electrode body group 20 (more specifically, a surface of a bent portion 20r to be described later) and which passes the point A, (3) a point B represents a point where the straight line 1 and the bottom surface 14a1 of the recessed portion 14a intersect with each other, and (4) a straight line C represents a straight line which is parallel to the straight line B and which passes the point B, the straight line B and the straight line C preferably pass the bottom surface 14a1 or the side surface 14a2 of the recessed portion 14a and more preferably pass the bottom surface 14a1. In addition, although not illustrated, in the cross section X2, when a straight line 1' represents a straight line corresponding to the straight line 1 of the cross section X1, a point A' represents a point corresponding to the point A of the cross section X1, a straight line B' represents a straight line corresponding to the straight line B of the cross section X1, and a straight line C' represents a straight line corresponding to the straight line C of the cross section X1, the straight line B' and the straight line C' preferably pass the bottom surface 14a1 or the side surface 14a2 of the recessed portion 14a and more preferably pass the bottom surface 14a1. According to such a configuration, an entirety of the maximum width portion 16d arranged in the recessed portion 14a can be more readily confirmed and reliability of the sealing portion can be improved.

In this case, the straight lines B and B' pass the base portion 14b of the sealing plate 14. A sealing plate passing distance of the straight lines B and B' is preferably 10 mm or less. Setting the sealing plate passing distance to or shorter than a predetermined value enables an X-ray examination to be more accurately performed. In addition, in this case, the straight lines C and C' pass a portion where the recessed portion 14a of the sealing plate 14 is formed or, in other words, the thickness remaining portion described above. The straight lines C and C' preferably do not pass the base portion 14b of the sealing plate 14. A sealing plate passing distance of the straight lines C and C' is preferably 10 mm or less. A shortest distance between the straight line C and the side surface 14a2 of the recessed portion 14a and a shortest distance between the straight line C' and the side surface 14a2 of the recessed portion 14a are preferably respectively within15 mm. Setting the shortest distance to or below a predetermined value enables a width of the recessed portion 14a to be minimized and a strength and deformation resistance of the sealing plate 14 to be increased.

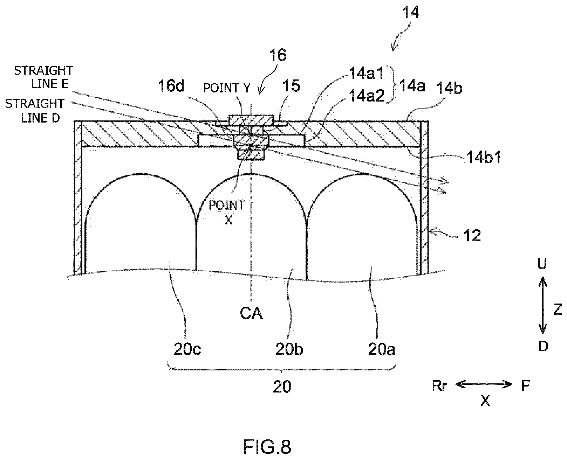

In some embodiments, as shown in FIG. 8, in the cross section X1, when (5) a point X represents an end on a side close to the electrode body group 20 of the maximum width portion 16d (a lower end in FIG. 8), (6) a straight line D represents a straight line which is a tangent at a surface on a side of the sealing plate 14 of the electrode body group 20 and which passes the point X, (7) a point Y represents an end on a side close to the sealing plate 14 of the maximum width portion 16d (an upper end in FIG. 8), and (8) a straight line E represents a straight line which is parallel to the straight line D and which passes the point Y, the straight line D and the straight line E preferably pass the bottom surface 14a1 or the side surface 14a2 of the recessed portion 14a and more preferably pass the bottom surface 14a1. In addition, although not illustrated, in the cross section X2, when a point X' represents a point corresponding to the point X of the cross section X1, a straight line D' represents a straight line corresponding to the straight line D of the cross section X1, a point Y' represents a point corresponding to the point Y of the cross section X1, and a straight line E' represents a straight line corresponding to the straight line E of the cross section X1, the straight line D' and the straight line E' preferably pass the bottom surface 14a1 or the side surface 14a2 of the recessed portion 14a and more preferably pass the bottom surface 14a1. According to such a configuration, an entirety of the maximum width portion 16d arranged in the recessed portion 14a can be more readily confirmed and reliability of the sealing portion can be improved.

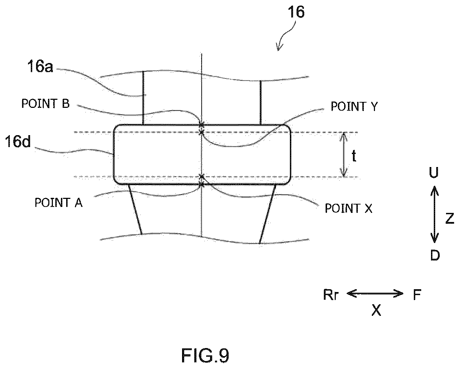

Although also depending on a depth (a length in the up-down direction Z) of the recessed portion 14a, in this case, the points X and X' are positioned above the lower surface 14b1 of the base portion 14b of the sealing plate 14. FIG. 9 is a partial enlarged view in which a vicinity of the maximum width portion 16d in FIG. 8 has been enlarged. As shown in FIG. 9, the point X is positioned above the point A (an intersection with the extension line EL of the lower surface 14b1 of the base portion 14b) described above. In addition, as shown in FIG. 8, in this case, the straight lines D and D' pass the base portion 14b of the sealing plate 14. A sealing plate passing distance of the straight lines D and D' is preferably 10 mm or less. Setting the sealing plate passing distance to or shorter than a predetermined value enables an X-ray examination to be more accurately performed.

In this case, the points Y and Y' are positioned below the bottom surface 14a1 of the recessed portion 14a. As shown in FIG. 9, the point Y is positioned below the point B (an intersection with the bottom surface 14a1 of the recessed portion 14a) described above. A vertical length t from the point X to the point Y (a height of the maximum width portion 16d) is preferably, for example, 1 mm or longer. The vertical length t from the point X to the point Y may be equal to or shorter than the depth (the length in the up-down direction Z) of the recessed portion 14a.

As shown in FIG. 8, the straight lines E and E' pass a portion where the recessed portion 14a of the sealing plate 14 is formed or, in other words, the thickness remaining portion described above. The straight lines E and E' preferably do not pass the base portion 14b of the sealing plate 14. A sealing plate passing distance of the straight lines E and E' is preferably 10 mm or less. A shortest distance between the straight line E and the side surface 14a2 of the recessed portion 14a and a shortest distance between the straight line E' and the side surface 14a2 of the recessed portion 14a are preferably respectively within15 mm. Setting the shortest distance to or below a predetermined value enables a width of the recessed portion 14a to be minimized and a strength and deformation resistance of the sealing plate 14 to be increased.

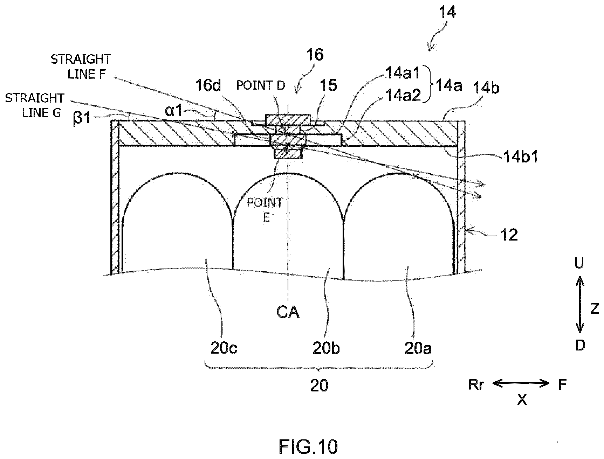

In some embodiments, as shown in FIG. 10, in the cross section X1 and/or the cross section X2, when (9) a point D represents an end on a side close to the sealing plate 14 of the maximum width portion 16d (an upper end in FIG. 10), (10) a straight line F represents a straight line which is a tangent at a surface on a side of the sealing plate 14 of the electrode body group 20 and which passes the point D, (11) a point E represents an end on a side close to the electrode body group 20 of the maximum width portion 16d (a lower end in FIG. 10), and (12) a straight line G represents a straight line which passes the point E and an edge of the bottom surface 14a1 of the recessed portion 14a, a difference (α1 - β1) between a maximum elevation angle α1 of the straight line F and a minimum elevation angle β1 of the straight line G is preferably 10 to 18 degrees. Accordingly, a strength and deformation resistance of the sealing plate 14 can be increased. In addition, even if an irradiation angle of X-rays deviates to a certain degree in an X-ray examination, the X-ray examination can be performed in a stable manner.

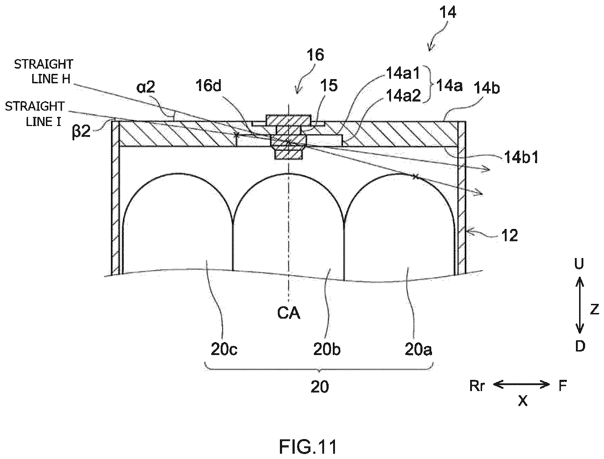

In some embodiments, as shown in FIG. 11, in the cross section X1 and/or the cross section X2, when (13) a straight line H represents a straight line which is a tangent at a surface on a side of the sealing plate 14 of the electrode body group 20 and which passes a center of the maximum width portion 16d, and (14) a straight line I represents a straight line which passes the center of the maximum width portion 16d and the bottom surface 14a1 of the recessed portion 14a (typically, an edge of the bottom surface 14a1), a difference (α2 - β2) between a maximum elevation angle α2 of the straight line H and a minimum elevation angle β2 of the straight line I is preferably 8 to 15 degrees. Accordingly, a strength and deformation resistance of the sealing plate 14 can be increased. In addition, even if an irradiation angle of X-rays deviates to a certain degree in an X-ray examination, the X-ray examination can be performed in a stable manner.

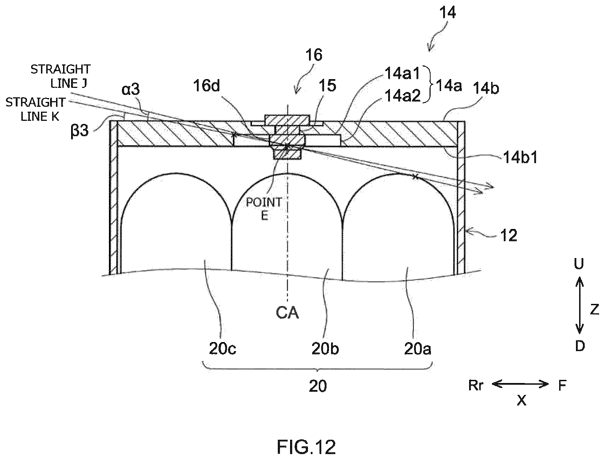

In some embodiments, as shown in FIG. 12, in the cross section X1 and/or the cross section X2, when (15) a point E represents an end on a side close to the electrode body group 20 of the maximum width portion 16d (a lower end in FIG. 12), (16) a straight line J represents a straight line which is a tangent at a surface on a side of the sealing plate 14 of the electrode body group 20 and which passes the point E, and (17) a straight line K represents a straight line which passes the point E and the bottom surface 14a1 of the recessed portion 14a (typically, an edge of the bottom surface 14a1), a difference (α3 - β3) between a maximum elevation angle α3 of the straight line J and a minimum elevation angle β3 of the straight line K is preferably 1 to 4 degrees. Accordingly, a strength and deformation resistance of the sealing plate 14 can be increased. In addition, even if an irradiation angle of X-rays deviates to a certain degree in an X-ray examination, the X-ray examination can be performed in a stable manner.

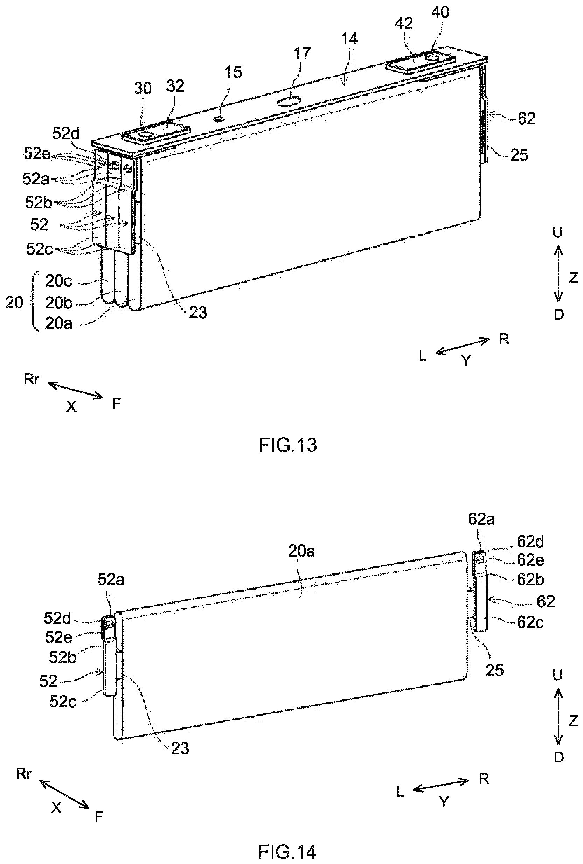

FIG. 13 is a perspective view schematically showing the electrode body group 20 attached to the sealing plate 14. In this case, the electrode body group 20 has three electrode bodies 20a, 20b, and 20c. However, the number of electrode bodies arranged inside a single battery case 10 is not particularly limited and there may be one or two or more (a plurality of) electrode bodies. The electrode bodies 20a, 20b, and 20c are connected in parallel by having the positive electrode current collecting unit 50 arranged on one side in the long-side direction Y (a left side in FIG. 13) and the negative electrode current collecting unit 60 arranged on the other side in the long-side direction Y (a right side in FIG. 13). Alternatively, the electrode bodies 20a, 20b, and 20c may be connected in series. The electrode body group 20 is arranged inside the outer package 12 of the battery case 10 in a state of being covered by an electrode body holder 29 (refer to FIG. 3) made of a resin sheet.

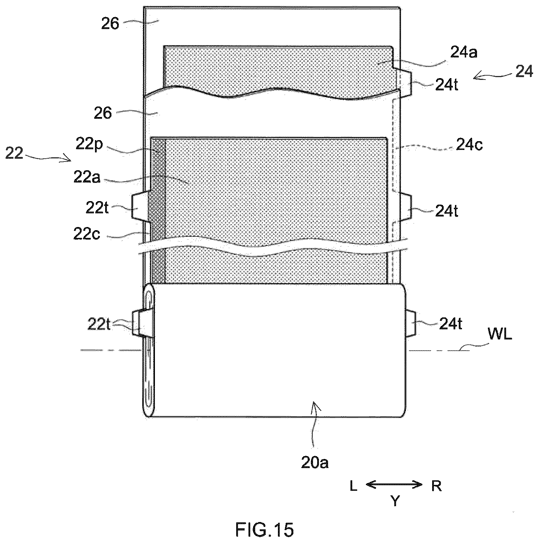

FIG. 14 is a perspective view schematically showing the electrode body 20a. FIG. 15 is a schematic view showing a configuration of the electrode body 20a. While the electrode body 20a will be described in detail below as an example, the electrode bodies 20b and 20c can also be configured in a similar manner.

As shown in FIG. 15, the electrode body 20a has a positive electrode 22, a negative electrode 24, and a separator 26. In this case, the electrode body 20a is a wound electrode body in which the band-shaped positive electrode 22 and the band-shaped negative electrode 24 are laminated via two band-shaped separators 26 and wound around a winding axis WL. The electrode body 20a has a flat external shape. Alternatively, the electrode body 20a may have a cylindrical external shape. The electrode body 20a is arranged inside the outer package 12 in an orientation where the winding axis WL is approximately parallel to the long-side direction Y (transversely arranged winding axis). Alternatively, the electrode body 20a may be arranged in an orientation where the winding axis WL is approximately parallel to the up-down direction Z (longitudinally arranged winding axis).

As shown in FIG. 3, the electrode body 20a has a pair of bent portions (R portions) 20r which oppose the bottom wall 12a of the outer package 12 and the sealing plate 14 and a flat portion 20f which connects the pair of bent portions 20r to each other and which opposes the long-side wall 12b of the outer package 12. The flat portion 20f extends along the long-side wall 12b. In such a case, since the electrode body group 20 is more readily irradiated by X-rays, the technique disclosed herein can be applied more effectively. Alternatively, the electrode body 20a may be a laminated electrode body in which a plurality of square-shaped (typically, rectangular-shaped) positive electrodes and a plurality of square-shaped (typically, rectangular-shaped) negative electrodes are stacked up in an insulated state.

As shown in FIG. 15, the positive electrode 22 has a positive electrode current collector 22c and a positive electrode active material layer 22a and a positive electrode protective layer 22p which are fixed to at least one surface of the positive electrode current collector 22c. However, the positive electrode protective layer 22p is not essential and may be omitted in other embodiments. The positive electrode current collector 22c has a band shape. For example, the positive electrode current collector 22c is made of a conductive metal such as aluminum, an aluminum alloy, nickel, or stainless steel. In this case, the positive electrode current collector 22c is a metal foil or, more specifically, an aluminum foil.

A plurality of positive electrode tabs 22t are provided at one end (a left end in FIG. 15) in the long-side direction Y of the positive electrode current collector 22c. The plurality of positive electrode tabs 22t are provided at intervals (intermittently) along the longitudinal direction of the positive electrode 22. The plurality of positive electrode tabs 22t protrude to one side (a left side in FIG. 15) in the long-side direction Y. The plurality of positive electrode tabs 22t protrude farther in the long-side direction Y than the separator 26. Alternatively, the positive electrode tabs 22t may be provided at the other end (a right end in FIG. 15) in the long-side direction Y or respectively provided at both ends in the long-side direction Y. The positive electrode tabs 22t are a part of the positive electrode current collector 22c and are made of a metal foil (aluminum foil). Alternatively, the positive electrode tabs 22t may be a separate member from the positive electrode current collector 22c. In at least a part of the positive electrode tabs 22t, the positive electrode active material layer 22a and the positive electrode protective layer 22p are not formed and the positive electrode current collector 22c is exposed.

As shown in FIG. 4, the plurality of positive electrode tabs 22t are laminated at one end (a left end in FIG. 4) in the long-side direction Y and constitute a positive electrode tab group 23. The plurality of positive electrode tabs 22t are bent so that outward side ends are aligned with each other. Accordingly, a storage property to the battery case 10 can be improved and the secondary battery 100 can be downsized. The positive electrode tab group 23 is electrically connected to the positive electrode terminal 30 via the positive electrode current collecting unit 50. Preferably, the plurality of positive electrode tabs 22t are bent and electrically connected to the positive electrode terminal 30. A positive electrode second current collecting unit 52 is attached to the positive electrode tab group 23. A size (a length in the long-side direction Y and a width perpendicular to the long-side direction Y: refer to FIG. 15) of the plurality of positive electrode tabs 22t can be appropriately adjusted in accordance with a formation position or the like in consideration of a state of being connected to the positive electrode current collecting unit 50. In this case, the plurality of positive electrode tabs 22t have mutually different sizes so that outward side ends are aligned when bent.

As shown in FIG. 15, the positive electrode active material layer 22a is provided in a band shape along a longitudinal direction of the band-shaped positive electrode current collector 22c. The positive electrode active material layer 22a includes a positive electrode active material (for example, a lithium-transition metal compound oxide such as lithium-nickel-cobalt-manganese compound oxide) which is capable of reversibly storing and releasing a charge carrier. When an entire solid content of the positive electrode active material layer 22a is assumed to be 100% by mass, the positive electrode active material may roughly occupy 80% by mass or more, typically 90% by mass or more and, for example, 95% by mass or more. The positive electrode active material layer 22a may include an arbitrary component other than the positive electrode active material such as a conductive material, a binder, or various additive components. As the conductive material, for example, a carbon material such as acetylene black (AB) can be used. As the binder, for example, polyvinylidene fluoride (PVdF) or the like can be used.

As shown in FIG. 15, the positive electrode protective layer 22p is provided in a boundary portion between the positive electrode current collector 22c and the positive electrode active material layer 22a in the long-side direction Y. In this case, the positive electrode protective layer 22p is provided at one end (the left end in FIG. 15) in the long-side direction Y of the positive electrode current collector 22c. Alternatively, the positive electrode protective layer 22p may be provided at both ends in the long-side direction Y.
The positive electrode protective layer 22p is provided in a band shape along the positive electrode active material layer 22a. The positive electrode protective layer 22p includes an inorganic filler (for example, alumina). When an entire solid content of the positive electrode protective layer 22p is assumed to be 100% by mass, the inorganic filler may roughly occupy 50% by mass or more, typically 70% by mass or more and, for example, 80% by mass or more. The positive electrode protective layer 22p may include an arbitrary component other than the inorganic filler such as a conductive material, a binder, or various additive components. The conductive material and the binder may be the same as exemplified as those that can be included in the positive electrode active material layer 22a.

As shown in FIG. 15, the negative electrode 24 has a negative electrode current collector 24c and a negative electrode active material layer 24a which is fixed to at least one surface of the negative electrode current collector 24c. The negative electrode current collector 24c has a band shape. For example, the negative electrode current collector 24c is made of a conductive metal such as copper, a copper alloy, nickel, or stainless steel. In this case, the negative electrode current collector 24c is a metal foil or, more specifically, a copper foil. Copper and copper alloys are materials with a high X-ray shielding property among metals.

A plurality of negative electrode tabs 24t are provided at one end (a right end in FIG. 15) in the long-side direction Y of the negative electrode current collector 24c. The plurality of negative electrode tabs 24t are provided at intervals (intermittently) along the longitudinal direction of the negative electrode 24. The plurality of negative electrode tabs 24t protrude farther in the long-side direction Y than the separator 26. The negative electrode tabs 24t protrude to one side (a right side in FIG. 15) in the long-side direction Y. Alternatively, the negative electrode tabs 24t may be provided at the other end (a left end in FIG. 15) in the long-side direction Y or respectively provided at both ends in the long-side direction Y. The negative electrode tabs 24t are a part of the negative electrode current collector 24c and are made of a metal foil (copper foil). Alternatively, the negative electrode tabs 24t may be a separate member from the negative electrode current collector 24c. In at least a part of the negative electrode tabs 24t, the negative electrode active material layer 24a is not formed and the negative electrode current collector 24c is exposed.

As shown in FIG. 4, the plurality of negative electrode tabs 24t are laminated at one end (a right end in FIG. 4) in the long-side direction Y and constitute a negative electrode tab group 25. The negative electrode tab group 25 is provided at a position that is symmetrical to the positive electrode tab group 23 with respect to the long-side direction Y. The plurality of negative electrode tabs 24t are bent so that outward side ends are aligned with each other. Accordingly, a storage property to the battery case 10 can be improved and the secondary battery 100 can be downsized. The negative electrode tab group 25 is electrically connected to the negative electrode terminal 40 via the negative electrode current collecting unit 60. Preferably, the plurality of negative electrode tabs 24t are bent and electrically connected to the negative electrode terminal 40. A negative electrode second current collecting unit 62 is attached to the negative electrode tab group 25. In this case, in a similar manner to the plurality of positive electrode tabs 22t, the plurality of negative electrode tabs 24t have mutually different sizes so that outward side ends are aligned when bent.

As shown in FIG. 15, the negative electrode active material layer 24a is provided in a band shape along a longitudinal direction of the band-shaped negative electrode current collector 24c. The negative electrode active material layer 24a includes a negative electrode active material (for example, a carbon material such as graphite) which is capable of reversibly storing and releasing a charge carrier. When an entire solid content of the negative electrode active material layer 24a is assumed to be 100% by mass, the negative electrode active material may roughly occupy 80% by mass or more, typically 90% by mass or more and, for example, 95% by mass or more. The negative electrode active material layer 24a may include an arbitrary component other than the negative electrode active material such as a binder, a dispersant, or various additive components. As the binder, for example, rubbers such as styrene butadiene rubber (SBR) can be used. As the dispersant, for example, celluloses such as carboxymethyl cellulose (CMC) can be used.

As shown in FIG. 15, the separator 26 is a member which insulates the positive electrode active material layer 22a of the positive electrode 22 and the negative electrode active material layer 24a of the negative electrode 24 from each other. Preferred examples of the separator 26 include a porous resin sheet made of a polyolefin resin such as polyethylene (PE) or polypropylene (PP). The separator 26 may have a base material portion made of a porous resin sheet and a heat resistance layer (HRL) which is provided on at least one surface of the base material portion and which includes an inorganic filler. As the inorganic filler, for example, alumina, boehmite, aluminum hydroxide, or titania can be used.

The electrolyte solution may be similar to conventional electrolyte solutions and is not particularly limited. For example, the electrolyte solution is a nonaqueous electrolytic solution that contains a nonaqueous solvent and a supporting salt. For example, the nonaqueous solvent includes carbonates such as ethylene carbonate, dimethyl carbonate, and ethyl methyl carbonate. The supporting salt is, for example, a fluorine-containing lithium salt such as LiPF₆. Alternatively, the electrolyte solution may have a solid form (a solid electrolyte) to be integrated with the electrode body group 20.

As shown in FIGS. 1 and 2, the positive electrode terminal 30 is arranged at one end (a left end in FIGS. 1 and 2) in the longitudinal direction of the sealing plate 14. The positive electrode terminal 30 is favorably fixed to the sealing plate 14. As shown in FIG. 2, the positive electrode terminal 30 is electrically connected inside the outer package 12 to the positive electrode 22 (refer to FIG. 15) of the electrode body group 20 via the positive electrode current collecting unit 50. The positive electrode terminal 30 is inserted to the terminal extracting hole 18 and extracted to the outside from the inside of the sealing plate 14. The positive electrode terminal 30 is insulated from the sealing plate 14 by the positive electrode internal insulating member 70 and a gasket 90. The positive electrode terminal 30 is preferably made of a metal and, for example, more preferably made of aluminum or an aluminum alloy.

A positive electrode external conductive member 32 is fixed on top of the positive electrode terminal 30. The positive electrode terminal 30 is electrically connected outside the battery case 10 to the positive electrode external conductive member 32. The positive electrode external conductive member 32 is attached to the sealing plate 14 in a state of being insulated from the sealing plate 14 by an external insulating member 92. The positive electrode external conductive member 32 is preferably made of a metal and, for example, more preferably made of aluminum or an aluminum alloy.

As shown in FIGS. 1 and 2, the negative electrode terminal 40 is arranged at the other end (a right end in FIGS. 1 and 2) in the longitudinal direction of the sealing plate 14. The negative electrode terminal 40 is favorably fixed to the sealing plate 14. As shown in FIG. 2, the negative electrode terminal 40 is electrically connected inside the outer package 12 to the negative electrode 24 (refer to FIG. 15) of the electrode body group 20 via the negative electrode current collecting unit 60. The negative electrode terminal 40 is inserted to the terminal extracting hole 19 and extracted to the outside from the inside of the sealing plate 14. The negative electrode terminal 40 is insulated from the sealing plate 14 by the negative electrode internal insulating member 80 and the gasket 90. The negative electrode terminal 40 is preferably made of a metal and, for example, more preferably made of copper or a copper alloy. The negative electrode terminal 40 may be constructed by joining and integrating two conductive members with each other. For example, in the negative electrode terminal 40, a portion to be connected to the negative electrode current collecting unit 60 may be made of copper or a copper alloy and a portion that is exposed to an outer side of the sealing plate 14 may be made of aluminum or an aluminum alloy. A specific configuration of the negative electrode terminal 40 may be similar to that of the positive electrode terminal 30.

A negative electrode external conductive member 42 is fixed on top of the negative electrode terminal 40. The negative electrode external conductive member 42 is connected outside the battery case 10 to the negative electrode terminal 40. The negative electrode external conductive member 42 is attached to the sealing plate 14 in a state of being insulated from the sealing plate 14 by the external insulating member 92. The negative electrode external conductive member 42 is preferably made of a metal and, for example, more preferably made of aluminum or an aluminum alloy.

The positive electrode current collecting unit 50 constitutes a conduction path that electrically connects the positive electrode tab group 23 made up of the plurality of positive electrode tabs 22t and the positive electrode terminal 30 to each other. As shown in FIG. 2, in this case, the positive electrode current collecting unit 50 is constituted of the positive electrode first current collecting unit 51 and the positive electrode second current collecting unit 52. The positive electrode first current collecting unit 51 and the positive electrode second current collecting unit 52 may be made of a same metallic species as the positive electrode current collector 22c which is a conductive metal such as aluminum, an aluminum alloy, nickel, or stainless steel.

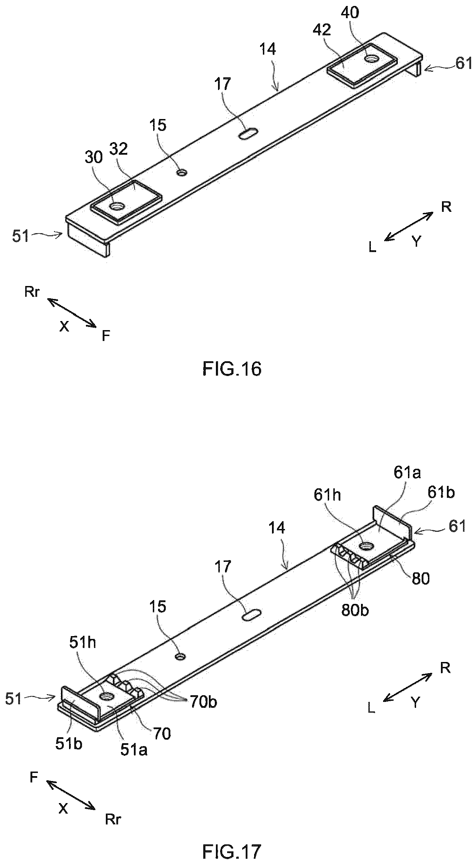

FIG. 16 is a perspective view schematically showing the sealing plate 14. FIG. 17 is a perspective view in which the sealing plate shown in FIG. 16 has been reversed. FIG. 17 shows a surface on a side that opposes the electrode body group 20 of the sealing plate 14 (a side of the inside of the battery). As shown in FIGS. 16 and 17, the positive electrode first current collecting unit 51 is attached to the surface on the side of the inside of the battery of the sealing plate 14. The positive electrode first current collecting unit 51 is electrically connected to the positive electrode terminal 30. The positive electrode first current collecting unit 51 has a first region 51a and a second region 51b. The positive electrode first current collecting unit 51 may be constructed by bending a single member by pressing or the like or by integrating a plurality of members by weld joining or the like.

The first region 51a is a portion that is arranged between the sealing plate 14 and the electrode body group 20. The first region 51a extends along the long-side direction Y. The first region 51a spreads horizontally along the surface on the side of the inside of the battery of the sealing plate 14. The positive electrode internal insulating member 70 is arranged between the sealing plate 14 and the first region 51a. The first region 51a is insulated from the sealing plate 14 by the positive electrode internal insulating member 70. The first region 51a is electrically connected to the positive electrode terminal 30. In the first region 51a, a through-hole 51h that penetrates in the up-down direction Z is formed at a position corresponding to the terminal extracting hole 18 of the sealing plate 14.

The second region 5 1b is a portion that is arranged between the short-side wall 12c of the outer package 12 and the electrode body group 20. As shown in FIG. 2, the second region 51b extends from one end (a left end in FIG. 2) in the long-side direction Y of the first region 51a toward the short-side wall 12c of the outer package 12. The second region 51b extends along the up-down direction Z. The second region 51b is joined with the positive electrode second current collecting unit 52.

As shown in FIG. 2, the positive electrode second current collecting unit 52 extends along the short-side wall 12c of the outer package 12. As shown in FIGS. 13 and 14, the positive electrode second current collecting unit 52 has a current collector plate connecting portion 52a, an inclined portion 52b, and a tab joining portion 52c.

The current collector plate connecting portion 52a is a portion to be electrically connected to the positive electrode first current collecting unit 51. The current collector plate connecting portion 52a extends along the up-down direction Z. The current collector plate connecting portion 52a is arranged approximately perpendicular to the winding axis WL of the electrode bodies 20a, 20b, and 20c. The current collector plate connecting portion 52a is provided with a recessed portion 52d of which a thickness is thinner than its surroundings. The recessed portion 52d is provided with a through-hole 52e that penetrates in the short-side direction X. A joining portion with the positive electrode first current collecting unit 51 is formed in the through-hole 52e. The joining portion is, for example, a weld joining portion formed by welding such as ultrasonic welding, resistance welding, or laser welding. In particular, welding due to irradiation of a high-energy beam such as a laser is favorably used.

The tab joining portion 52c is a portion which is attached to the positive electrode tab group 23 and which is to be electrically connected to the plurality of positive electrode tabs 22t. The tab joining portion 52c extends along the up-down direction Z. The tab joining portion 52c is arranged approximately perpendicular to the winding axis WL of the electrode bodies 20a, 20b, and 20c. A surface to be connected to the plurality of positive electrode tabs 22t of the tab joining portion 52c is arranged approximately parallel to the short-side wall 12c of the outer package 12.

As shown in FIG. 4, a joining portion J with the positive electrode tab group 23 is formed in the tab joining portion 52c. The joining portion J is, for example, a weld joining portion formed by welding such as ultrasonic welding, resistance welding, or laser welding in a state where the plurality of positive electrode tabs 22t are stacked. In the joining portion J, the plurality of positive electrode tabs 22t are arranged on one side in the short-side direction X of the electrode bodies 20a, 20b, and 20c. Accordingly, the plurality of positive electrode tabs 22t can be more preferably bent and the positive electrode tab group 23 with a bent shape as shown in FIG. 4 can be formed in a stable manner.

The inclined portion 52b is a portion which couples a lower end of the current collector plate connecting portion 52a and an upper end of the tab joining portion 52c. The inclined portion 52b is inclined with respect to the current collector plate connecting portion 52a and the tab joining portion 52c. The inclined portion 52b couples the current collector plate connecting portion 52a and the tab joining portion 52c to each other so that the current collector plate connecting portion 52a is positioned closer to a center side than the tab joining portion 52c in the long-side direction Y. Accordingly, a housing space of the electrode body group 20 can be widened and high energy density of the secondary battery 100 can be achieved. A lower end of the inclined portion 52b (in other words, an end on the side of the bottom wall 12a of the outer package 12) is favorably positioned lower than a lower end of the positive electrode tab group 23. Accordingly, the plurality of positive electrode tabs 22t can be more preferably bent and the positive electrode tab group 23 with a bent shape as shown in FIG. 4 can be formed in a stable manner.

The negative electrode current collecting unit 60 constitutes a conduction path that electrically connects the negative electrode tab group 25 made up of the plurality of negative electrode tabs 24t and the negative electrode terminal 40 to each other. As shown in FIG. 2, in this case, the negative electrode current collecting unit 60 is constituted of the negative electrode first current collecting unit 61 and the negative electrode second current collecting unit 62. The negative electrode first current collecting unit 61 and the negative electrode second current collecting unit 62 may be made of a same metallic species as the negative electrode current collector 24c which is a conductive metal such as copper, a copper alloy, nickel, or stainless steel. A specific configuration of the negative electrode first current collecting unit 61 and the negative electrode second current collecting unit 62 may be similar to that of the positive electrode first current collecting unit 51 and the positive electrode second current collecting unit 52 of the positive electrode current collecting unit 50.

As shown in FIG. 17, the negative electrode first current collecting unit 61 has a first region 61a and a second region 61b. The negative electrode internal insulating member 80 is arranged between the sealing plate 14 and the first region 61a. The first region 61a is insulated from the sealing plate 14 by the negative electrode internal insulating member 80. In the first region 61a, a through-hole 61h that penetrates in the up-down direction Z is formed at a position corresponding to the terminal extracting hole 19 of the sealing plate 14. As shown in FIG. 14, the negative electrode second current collecting unit 62 has a current collector plate connecting portion 62a to be electrically connected to the negative electrode first current collecting unit 61, an inclined portion 62b, and a tab joining portion 62c which is attached to the negative electrode tab group 25 and which is to be electrically connected to the plurality of negative electrode tabs 24t. The current collector plate connecting portion 62a has a recessed portion 62d to be coupled to the tab joining portion 62c. The recessed portion 62d is provided with a through-hole 62e that penetrates in the short-side direction X.

The positive electrode internal insulating member 70 is a member which insulates the sealing plate 14 and the positive electrode first current collecting unit 51 from each other inside the battery case 10. For example, the positive electrode internal insulating member 70 is made of a resin material which has resistance with respect to an electrolyte solution to be used and an electrical insulating property and which is capable of elastic deformation. The positive electrode internal insulating member 70 is favorably made of a polyolefin-based resin such as polypropylene (PP), a fluorinated resin such as tetrafluoroethylene-perfluoroalkoxy ethylene copolymer (PFA), or polyphenylene sulfide (PPS). As shown in FIG. 2, the positive electrode internal insulating member 70 has a base portion 70a and a plurality of protruding portions 70b. In this case, the base portion 70a and the protruding portions 70b are integrally molded.

The base portion 70a is a portion which is arranged between the sealing plate 14 and the first region 51a of the positive electrode first current collecting unit 51 in the up-down direction Z. The base portion 70a spreads horizontally along the first region 51a of the positive electrode first current collecting unit 51. The base portion 70a has a through-hole (not illustrated) that penetrates in the up-down direction Z. The through-hole is formed at a position corresponding to the terminal extracting hole 18 of the sealing plate 14.

Each of the plurality of protruding portions 70b protrudes to a side of the electrode body group 20 than the base portion 70a. As shown in FIG. 17, in the long-side direction Y, the plurality of protruding portions 70b are provided on a side of the center of the sealing plate 14 (a right side in FIG. 17) than the base portion 70a. The plurality of protruding portions 70b are arranged side by side in the short-side direction X. As shown in FIG. 3, in this case, the plurality of protruding portions 70b oppose the bent portion 20r of the electrode bodies 20a, 20b, and 20c which constitute the electrode body group 20. In this case, the number of the protruding portions 70b is the same as the number of the electrode bodies 20a, 20b, and 20c which constitute the electrode body group 20. In other words, there are three protruding portions 70b. However, the number of the protruding portions 70b may differ from the number of electrode bodies that constitute the electrode body group 20 and, for example, there may be one protruding portion 70b.

As shown in FIG. 2, the negative electrode internal insulating member 80 is arranged symmetrical to the positive electrode internal insulating member 70 with respect to the long-side direction Y of the electrode body group 20. A specific configuration of the negative electrode internal insulating member 80 may be similar to that of the positive electrode internal insulating member 70. In this case, the negative electrode internal insulating member 80 has a base portion 80a arranged between the sealing plate 14 and the negative electrode first current collecting unit 61 and a plurality of protruding portions 80b in a similar manner to the positive electrode internal insulating member 70.

### Method of Manufacturing Secondary Battery 100

In the secondary battery 100, the electrolyte injection hole 15 (the through-hole) of the sealing plate 14 is sealed by the blind rivet 16 (the sealing member). The secondary battery 100 can be manufactured by a manufacturing method including an assembly step, an enlarged diameter portion forming step, and a confirming step in this order. In addition, the manufacturing method disclosed herein may further include other steps at any stage.

In the assembly step, first, the outer package 12, the sealing plate 14, the electrode body group 20, and an electrolyte solution are prepared. The sealing plate 14 has the recessed portion 14a and the electrolyte injection hole 15. Next, after housing the electrode body group 20 in an internal space of the outer package 12, the sealing plate 14 is joined to an edge portion of the opening 12h of the outer package 12 to seal the opening 12h. Joining of the outer package 12 and the sealing plate 14 can be performed by, for example, weld joining such as laser welding. Subsequently, the electrolyte solution is injected from the electrolyte injection hole 15.

In the enlarged diameter portion forming step, first, a blind rivet as the sealing member is prepared. The blind rivet may be the same as those conventionally used and is not particularly limited. In an example, the blind rivet includes a cylindrical sleeve which can be inserted into the electrolyte injection hole 15 in a state prior to processing (prior to sealing the electrolyte injection hole 15), a collar-shaped flange which extends from an end of the sleeve and of which an outer diameter is larger than the electrolyte injection hole 15, a bag portion which is a part of the sleeve and which is provided at an end on an opposite side to the flange, and a mandrel (a shaft) which is provided inside the sleeve and the bag portion. While materials of the blind rivet are not particularly limited, in an example, the sleeve is made of aluminum (for example, A1200W) and the mandrel is made of stainless steel (for example, SUS430). One end of the mandrel extends out from the flange. A head portion with a larger diameter than the one end is formed at the other end of the mandrel. The head portion is positioned in a vicinity of the bag portion.

Next, the prepared blind rivet is inserted into the electrolyte injection hole 15 of the sealing plate 14. Specifically, the sleeve of the blind rivet is inserted into the electrolyte injection hole 15 from a side of the bag portion. In addition, while pressing the flange against the sealing plate 14, a portion of the mandrel that extends out from the flange is pulled upward using a tool or the like. Accordingly, an inside of the bag portion plastically deforms and, at the same time, the portion of the mandrel that extends out from the flange is cut off and eliminated. As a result, as shown in FIG. 6, the enlarged diameter portion 16c is formed at a lower end of the inserted portion 16a, the blind rivet 16 is fixed by swaging to a peripheral edge of the electrolyte injection hole 15, and the electrolyte injection hole 15 is sealed by the blind rivet 16.

In the confirming step, an X-ray examination is performed with respect to the battery after the enlarged diameter portion forming step. Specifically, the blind rivet 16 is irradiated with X-rays to check whether or not a shape of the blind rivet 16 after swaging (after deformation) or, in other words, the enlarged diameter portion 16c is a predetermined shape. Accordingly, defective swaging can be detected with accuracy and sealability of the electrolyte injection hole 15 can be confirmed. Therefore, an outflow of products with detective swaging can be prevented and reliability of the secondary battery 100 can be improved. In an example, whether or not a width of the maximum width portion 16d in the longitudinal direction of the sealing plate 14 is within a predetermined range is favorably checked by the X-ray examination. In another example, a position of a surface (a lower surface) on a side opposing the electrode body group 20 of the enlarged diameter portion 16c is favorably checked by the X-ray examination. Accordingly, reliability can be further improved. An example of conditions of the X-ray examination may include, with respect to exposure conditions including an 80 kV accelerating voltage and a 150 uA beam current, an exposure time of 50 ms and a cumulated number of 16 times.

In the X-ray examination, the sealing plate 14 is favorably diagonally irradiated with X-rays from a short direction so as to shorten a distance traveled by X-rays to pass through the sealing plate 14 (a sealing plate passing distance). In an example, the X-rays are emitted along the straight line A as shown in FIG. 6. For example, favorably, an X-ray source is arranged above the sealing plate 14 and on one side (a rear side in FIG. 6) in the short direction of the sealing plate 14 and a detector for detecting X-rays emitted from the X-ray source is arranged below the sealing plate 14 and on the one side in the short direction of the sealing plate 14.

For example, when the sealing plate 14 is constituted of a material that does not readily transmit X-rays (for example, a metal such as aluminum or an aluminum alloy), side-on X-ray irradiation (horizontal photography) may result in an unclear X-ray photograph of the enlarged diameter portion 16c and reliability of examinations may decline. By comparison, with diagonal photography (oblique photography), the sealing plate passing distance of X-rays can be reduced. In addition, since the sealing plate 14 disclosed herein is provided with the recessed portion 14a, the sealing plate passing distance of X-rays can be further reduced. As a result, a clear X-ray photograph of the enlarged diameter portion 16c can be obtained and whether or not the enlarged diameter portion 16c has a predetermined shape can be accurately determined.

The secondary battery 100 can be manufactured as described above.

While the secondary battery 100 can be used in various applications, for example, the secondary battery 100 can be preferably used as a power supply (drive power supply) for a motor mounted to a vehicle such as a passenger vehicle or a truck. While a type of the vehicle is not particularly limited, examples thereof include a plug-in hybrid electric vehicle (PHEV), a hybrid electric vehicle (HEV), and a battery electric vehicle (BEV).

While several embodiments of the present disclosure have been described above, the embodiments are merely examples. The present disclosure can be implemented in various other modes. The present disclosure can be carried out on the basis of the contents disclosed in the present specification and common general technical knowledge in the relevant field. Techniques described in the scope of claims include various modifications and changes made to the embodiments illustrated above. For example, a part of the embodiments described above may be replaced with another modification or another modification may be added to the embodiments described above. In addition, any technical feature not described as being essential can be deleted when appropriate.

For example, in the embodiment shown in FIG. 5 described above, the recessed portion 14a is formed in an approximately circular shape in a plan view. However, embodiments are not limited thereto. The recessed portion 14a may be formed in a polygonal shape such as an approximately quadrangular shape in a plan view. In a given modification, the recessed portion 14a may have an approximately rectangular shape in a plan view. For example, a width of the recessed portion 14a in the longitudinal direction of the sealing plate 14 (the long-side direction Y in FIG. 5) may be shorter than a width of the recessed portion 14a in the short direction of the sealing plate 14 (the short-side direction X in FIG. 5). Accordingly, accuracy of an X-ray examination and a strength of the sealing plate 14 can be increased in a balanced manner. In addition, in another modification, the recessed portion 14a may have an approximately square shape in a plan view. Of the recessed portion 14a, a width in the short-side direction X and a width in the long-side direction Y may be approximately the same (width in the short-side direction X: a width in the long-side direction Y = 1: around 0.8 to 1.2).

In addition, in the embodiment shown in FIG. 5 described above, the center of the recessed portion 14a coincides with the center of the electrolyte injection hole 15 in a plan view. However, embodiments are not limited thereto. In a plan view, the center of the recessed portion 14a may be positioned to a side on which X-rays are emitted in an X-ray examination than the center of the electrolyte injection hole 15. The recessed portion 14a may be eccentrically provided to a side on which X-rays are emitted in an X-ray examination. Accordingly, a portion to be irradiated with X-rays of the sealing plate 14 can be selectively thinned and the sealing plate passing distance of X-rays can be further reduced.

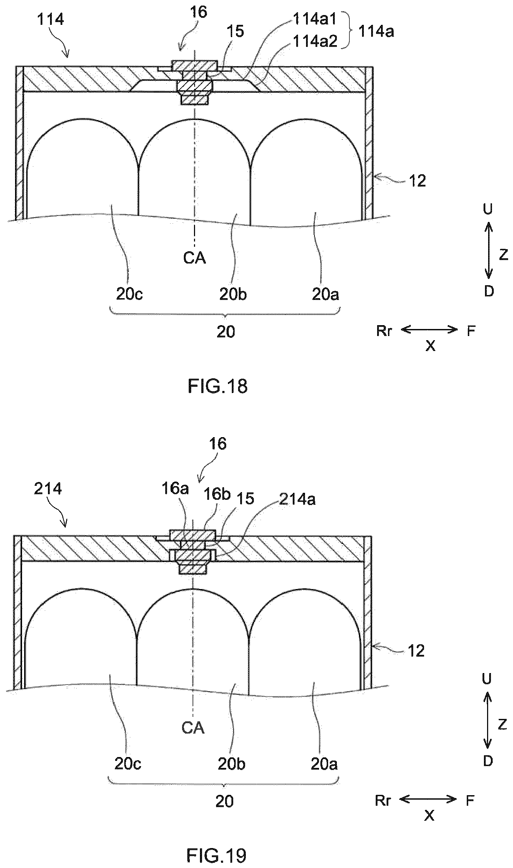

Furthermore, for example, in the embodiment shown in FIG. 6 described above, the side surface 14a2 of the recessed portion 14a rises approximately vertically from the bottom surface 14a1. However, embodiments are not limited thereto. FIG. 18 is diagram corresponding to FIG. 6 of a battery according to a first modification. As shown in FIG. 18, the battery according to the first modification includes a sealing plate 114 with a recessed portion 114a. The recessed portion 114a has a bottom surface 114a1 and a side surface 114a2. The side surface 114a2 has a tapered shape. The side surface 114a2 is formed in a tapered shape of which a diameter increases the farther away from the bottom surface 114a1 (in other words, the closer to the electrode body group 20). Accordingly, an edge (a corner) of the recessed portion 114a is less likely to be irradiated by X-rays and the sealing plate passing distance of X-rays can be further reduced in an X-ray examination. Therefore, an X-ray examination can be more accurately performed.

In addition, for example, in the embodiments shown in FIGS. 5 and 6 described above, the sealing member is the blind rivet 16. However, embodiments are not limited thereto. The sealing member need only include the inserted portion and the enlarged diameter portion described above and is not limited to the blind rivet 16. In addition, a cross section of the blind rivet 16 is not limited to the embodiment shown in FIG. 7 and may be an arbitrary shape.

Furthermore, for example, in the embodiment shown in FIG. 6 described above, the recessed portion 14a of the sealing plate 14 is larger than the flange portion 16b of the blind rivet 16. However, embodiments are not limited thereto. FIG. 19 is diagram corresponding to FIG. 6 of a battery according to a second modification. As shown in FIG. 19, the battery according to the second modification includes a sealing plate 214 with a recessed portion 214a. In the battery according to the second modification, the recessed portion 214a is approximately the same as or smaller than the flange portion 16b of the blind rivet 16. Accordingly, a strength and deformation resistance of the sealing plate 214 can be further increased.

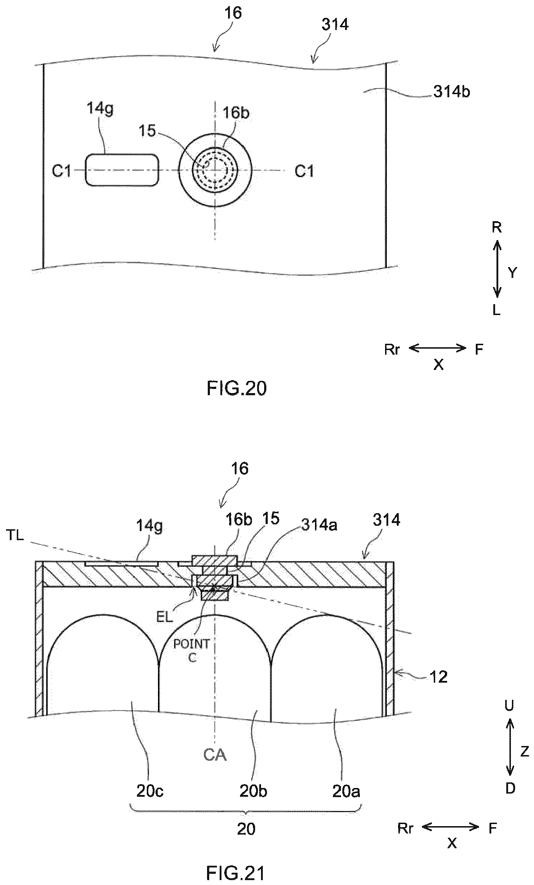

In addition, for example, in the embodiment shown in FIG. 6, the first modification shown in FIG. 18, and the second modification shown in FIG. 19 described above, a region separated from the electrolyte injection hole 15 is formed flat on the upper surface of the sealing plate 14 (a surface on an outer side of the battery). However, embodiments are not limited thereto. FIG. 20 is schematic plan view showing a part of a sealing plate 314 of a battery according to a third modification. The battery according to the third modification includes a sealing plate 314. The sealing plate 314 has a base portion 314b with an approximately uniform thickness. On the surface on an outer side of the battery of the sealing plate 314, a recessed groove portion 14g is provided at a position separated from the electrolyte injection hole 15.

Let us assume that a cross section C1 represents a cross section along a line C1-C1 which extends along the up-down direction Z and the short-side direction X (which is perpendicular to the sealing plate 314 and which extends in a short direction of the sealing plate 314) and which passes a center in the long-side direction Y of the sealing plate 314 (the longitudinal direction of the sealing plate 314). FIG. 21 is a schematic view of the cross section C1. As shown in FIG. 21, in the cross section C1, a recessed portion 314a is provided on a surface on a side opposing the electrode body group 20 of the sealing plate 314 (a lower surface in FIG. 21). In addition, when a point C represents a point where the central axis CA of the blind rivet 16 and an extension line EL of a lower surface 314b1 of the base portion 314b intersect with each other, the groove portion 14g is formed so as to intersect with a tangent TL drawn from the point C to a surface on a side of the sealing plate 314 of the electrode body group 20. Accordingly, the sealing plate passing distance can be further reduced and an X-ray examination can be more accurately performed.

When the width of the sealing plate 14 is assumed to be 100% in the short-side direction X, a ratio of the width of the groove portion 14g is preferably 15 to 35% and more preferably 25% or less. Accordingly, a strength and deformation resistance of the sealing plate 14 can be increased. In addition, a thickness (a length in the up-down direction Z) of a thickness remaining portion of the sealing plate 14 of a portion where the groove portion 14g has been formed is preferably 1.2 to 2.2 mm, more preferably 1.3 to 1.8 mm, and even more preferably 1.4 to 1.6 mm. Accordingly, accuracy of an X-ray examination and a strength and deformation resistance of the sealing plate 14 can be increased in a balanced manner.

## Claims

1. A battery (100), comprising:
an electrode body (20) which has a positive electrode (22) and a negative electrode (24);
an outer package (12) which has an opening (12h) and which houses the electrode body (20);
a sealing plate (14) which seals the opening (12h) of the outer package (12) and which has a through-hole (15) and a recessed portion (14a) provided around the through-hole (15) on a surface on a side opposing the electrode body (20); and
a sealing member (16) which seals the through-hole (15) of the sealing plate (14),
wherein
the sealing member (16) having
an inserted portion (16a) having been inserted to the through-hole (15) and
an enlarged diameter portion (16c) which extends from the inserted portion (16a) to inside of the outer package (12) and which is formed with a larger diameter than the inserted portion (16a), and
at least a part of the enlarged diameter portion (16c) being arranged inside the recessed portion (14a) of the sealing plate (14).

2. The battery (100) according to claim 1, wherein
the sealing plate (14) has an approximately rectangular shape,
the enlarged diameter portion (16c) has a maximum width portion (16d) with a maximum width in a longitudinal direction of the sealing plate (14), and
when a cross section X1 represents a cross section which is perpendicular to the sealing plate (14), which extends in a short direction of the sealing plate (14), and which passes an end (16e1) in the longitudinal direction of the maximum width portion (16d) and
a cross section X2 represents a cross section which is perpendicular to the sealing plate (14), which extends in a short direction of the sealing plate (14), and which passes another end (16e2) in the longitudinal direction of the maximum width portion (16d),
the cross section X1 and the cross section X2 have a straight line A which passes the maximum width portion (16d) and which does not intersect with the electrode body (20).

3. The battery (100) according to claim 2, wherein
the sealing plate (14) is made of aluminum or an aluminum alloy, and
in each of the cross section X1 and the cross section X2, a distance of the straight line A passing the sealing plate (14) is 10 mm or less.

4. The battery (100) according to claim 2 or 3, wherein
in each of the cross section X1 and the cross section X2, the straight line A passes the recessed portion (14a).

5. The battery (100) according to any one of claims 2 to 4, wherein
the recessed portion (14a) has a bottom surface (14a1) and a side surface (14a2) that rises to a side of the electrode body (20) from an outer edge of the bottom surface (14a1), and
in each of the cross section X1 and the cross section X2, the straight line A passes the bottom surface (14a1) of the recessed portion (14a).

6. The battery (100) according to any one of claims 2 to 5, wherein
the sealing plate (14) has a base portion (14b) with an approximately uniform thickness, and
in each of the cross section X1 and the cross section X2, the straight line A does not pass a surface on a side opposing the electrode body (20) of the base portion (14b).

7. The battery (100) according to claim 1, wherein
the sealing plate (14) has a base portion (14b) with an approximately rectangular shape and an approximately uniform thickness,
the enlarged diameter portion (16c) has a maximum width portion (16d) with a maximum width in a longitudinal direction of the sealing plate (14),
the recessed portion (14a) has a bottom surface (14a1) and a side surface (14a2) that rises to a side of the electrode body (20) from an outer edge of the bottom surface (14a1), and
when a cross section X1 represents a cross section which is perpendicular to the sealing plate (14), which extends in a short direction of the sealing plate (14), and which passes an end (16e1) in the longitudinal direction of the maximum width portion (16d) and
a cross section X2 represents a cross section which is perpendicular to the sealing plate (14), which extends in a short direction of the sealing plate (14), and which passes another end (16e2) in the longitudinal direction of the maximum width portion (16d),
in the cross section X1,
when a point A represents a point where a straight line 1 which is parallel to a central axis (CA) of the sealing member (16) and which passes the maximum width portion (16d) and an extension line (EL) of a surface on a side opposing the electrode body (20) of the base portion (14b) intersect with each other,
a straight line B represents a straight line which is a tangent at a surface on a side of the sealing plate (14) of the electrode body (20) and which passes the point A,
a point B represents a point where the straight line 1 and the bottom surface (14a1) of the recessed portion (14a) intersect with each other, and
a straight line C represents a straight line which is parallel to the straight line B and which passes the point B,
the straight line B and the straight line C pass the bottom surface (14a1) or the side surface (14a2) of the recessed portion (14a), and
in the cross section X2,
when a point A' represents a point where a straight line 1' which is parallel to a central axis (CA) of the sealing member (16) and which passes the maximum width portion (16d) and an extension line (EL) of a surface on a side opposing the electrode body (20) of the base portion (14b) intersect with each other,
a straight line B' represents a straight line which is a tangent at a surface on a side of the sealing plate (14) of the electrode body (20) and which passes the point A',
a point B' represents a point where the straight line 1' and the bottom surface (14a1) of the recessed portion (14a) intersect with each other, and
a straight line C' represents a straight line which is parallel to the straight line B' and which passes the point B',
the straight line B' and the straight line C' pass the bottom surface (14a1) or the side surface (14a2) of the recessed portion (14a).

8. The battery (100) according to claim 7, wherein
the straight line B and the straight line B' pass the bottom surface (14a1) of the recessed portion (14a).

9. The battery (100) according to claim 7 or 8, wherein
a shortest distance between the straight line C and the side surface (14a2) of the recessed portion (14a) and a shortest distance between the straight line C' and the side surface (14a2) of the recessed portion (14a) are each within 15 mm.

10. The battery (100) according to claim 1, wherein
the sealing plate (14) has a base portion (14b) with an approximately rectangular shape and an approximately uniform thickness,
the enlarged diameter portion (16c) has a maximum width portion (16d) with a maximum width in a longitudinal direction of the sealing plate (14),
the recessed portion (14a) has a bottom surface (14a1) and a side surface (14a2) that rises to a side of the electrode body (20) from an outer edge of the bottom surface (14a1), and
when a cross section X1 represents a cross section which is perpendicular to the sealing plate (14), which extends in a short direction of the sealing plate (14), and which passes an end (16e1) in the longitudinal direction of the maximum width portion (16d) and
a cross section X2 represents a cross section which is perpendicular to the sealing plate (14), which extends in a short direction of the sealing plate (14), and which passes another end (16e2) in the longitudinal direction of the maximum width portion (16d),
in the cross section X1,
when a point X represents an end on a side close to the electrode body (20) of the maximum width portion (16d),
a straight line D represents a straight line which is a tangent at a surface on a side of the sealing plate (14) of the electrode body (20) and which passes the point X,
a point Y represents an end on a side close to the sealing plate (14) of the maximum width portion (16d), and
a straight line E represents a straight line which is parallel to the straight line D and which passes the point Y,
the straight line D and the straight line E pass the bottom surface (14a1) or the side surface (14a2) of the recessed portion (14a), and
in the cross section X2,
when a point X' represents an end on a side close to the electrode body (20) of the maximum width portion (16d),
a straight line D' represents a straight line which is a tangent at a surface on a side of the sealing plate (14) of the electrode body (20) and which passes the point X',
a point Y' represents an end on a side close to the sealing plate (14) of the maximum width portion (16d), and
a straight line E' represents a straight line which is parallel to the straight line D' and which passes the point Y',
the straight line D' and the straight line E' pass the bottom surface (14a1) or the side surface (14a2) of the recessed portion (14a).

11. The battery (100) according to any one of claims 1 to 5, wherein
the sealing plate (314) has a base portion (14b) with an approximately rectangular shape and an approximately uniform thickness, and
in a cross section C1 which is perpendicular to the sealing plate (14), which extends in a short direction of the sealing plate (314), and which passes a center of the sealing member (16), when a point C represents a point where a central axis (CA) of the sealing member (16) and an extension line (EL) of a surface on a side opposing the electrode body (20) of the base portion (14b) intersect with each other,
a surface on a side farther from the electrode body (20) of the sealing plate (314) is provided with a groove portion (14g) so as to intersect with a tangent (TL) drawn from the point C to a surface on a side of the sealing plate (314) of the electrode body (20).

12. A method of manufacturing a battery, the battery (100) including:
an electrode body (20) which has a positive electrode (22) and a negative electrode (24); an outer package (12) which has an opening (12h) and which houses the electrode body (20); a sealing plate (14) which seals the opening (12h) of the outer package (12) and which has a through-hole (15) and a recessed portion (14a) provided around the through-hole (15) on a surface on a side opposing the electrode body (20); and a sealing member (16) which seals the through-hole (15) of the sealing plate (14),
the sealing member (16) having an inserted portion (16a) having been inserted to the through-hole (15) and an enlarged diameter portion (16c) which extends from the inserted portion (16a) to inside of the outer package (12) and which is formed with a larger diameter than the inserted portion (16a), and
at least a part of the enlarged diameter portion (16c) being arranged inside the recessed portion (14a) of the sealing plate (14),
the method of manufacturing a battery comprising the steps of:
forming the enlarged diameter portion (16c) by inserting the sealing member (16) into the through-hole (15) from the outside of the outer package (12) and causing a tip of the sealing member (16) to deform; and
after forming the enlarged diameter portion (16c), confirming whether or not the enlarged diameter portion (16c) has a predetermined shape by emitting X-rays.

13. The method of manufacturing a battery according to claim 12, wherein
the sealing plate (14) has an approximately rectangular shape,
the enlarged diameter portion (16c) has a maximum width portion (16d) with a maximum width in a longitudinal direction of the sealing plate (14),
when a cross section X1 represents a cross section which is perpendicular to the sealing plate (14), which extends in a short direction of the sealing plate (14), and which passes an end (16e 1) in the longitudinal direction of the maximum width portion (16d) and
a cross section X2 represents a cross section which is perpendicular to the sealing plate (14), which extends in a short direction of the sealing plate (14), and which passes another end (16e2) in the longitudinal direction of the maximum width portion (16d),
the cross section X1 and the cross section X2 have a straight line A which passes the maximum width portion (16d) and which does not intersect with the electrode body (20), and
in the confirming step, the X-rays are emitted along the straight line A.
